# EUROPÄISCHE PATENTSCHRIFT

(11) **EP 4 102 151 B1**
(45) Veröffentlichungstag und Bekanntmachung des Hinweises auf die Patenterteilung: **08.04.2026**
(21) Anmeldenummer: 22176279.2
(22) Anmeldetag: 31.05.2022
(51) Int. Cl.: F24V 30/00, F24D 3/18, F24D 15/00, C05F 17/60, C05F 17/964

(54) **HEIZUNGSANLAG**
HEATING INSTALLATION
INSTALLATION DE CHAUFFAGE

(30) Priorität: 09.06.2021 IT 202100015014
(43) Veröffentlichungstag der Anmeldung: 14.12.2022
(73) Patentinhaber: Biologik-Systems, 39100 Bolzano (IT)
(72) Erfinder: Diana, Tobias, 39100 Bolzano (IT)
(74) Vertreter: Ausserer, Anton

(56) Entgegenhaltungen:
- EP-A1- 2 103 583
- WO-A1-2014/141804
- WO-A2-2013/008045
- CH-A5- 673 075
- DE-U1- 20 002 783
- SE-L- 9 701 902
- US-A1- 2009 029 448

## Beschreibung

Die vorliegende Erfindung betrifft eine Heizungsanlage nach dem Oberbegriff des Anspruchs 1.

### Technischer Bereich

Bei dem beschriebenen System wird die Wärme auf natürliche Weise aus dem sich zersetzenden Material eines Komposthaufens erzeugt. Bei der Zersetzung des biologischen Materials wird Wärme erzeugt, die für den Benutzer zur Nutzung entzogen wird.

### Stand der Technik

Die EP 3 635 303 offenbart ein Heizsystem zum Erwärmen einer Flüssigkeit, insbesondere einer Flüssigkeit wie Wasser, unter Verwendung von Wärme, die auf natürliche Weise durch das sich zersetzende Material eines Komposthaufens erzeugt wird, umfassend eine Vielzahl von Hohlkörpern, die innerhalb des Komposthaufens angeordnet sind, in direktem Kontakt mit dem mit dem Kompostiergut stehen und mehrfach von der zu erhitzenden Flüssigkeit durchströmt werden, und einen innerhalb des Komposthaufens angeordneten und in direktem Kontakt mit dem Kompostiergut stehenden Aufnahmekörper, wobei die Hohlkörper von dem Aufnahmekörper zurückgehalten werden, gemäß der Offenbarung ferner umfassend: einen Behälter, dessen einzige Öffnungen die Öffnungen für den Eintritt der Flüssigkeit in den Behälter und die Öffnungen für den Austritt der Flüssigkeit aus dem Behälter sind; eine Zuleitung, deren eines Ende mit dem Behälter und deren anderes Ende mit einem ersten Öffnungs- und Schließventil verbunden ist, in das die zu erwärmende Flüssigkeit, die aus einer Quelle außerhalb des Heizsystems stammt, eingeleitet wird; ein Auslassrohr, dessen eines Ende mit dem Behälter und dessen anderes Ende mit einem zweiten Öffnungs- und Schließventil verbunden ist, aus dem die erwärmte Flüssigkeit in das Heizsystem abgelassen wird; Rohre, über die die Hohlkörper mit dem Behälter verbunden sind, wobei die Hohlkörper zusammen mit dem Behälter und den Rohren mindestens einen Heizkreislauf bilden, in dem die Flüssigkeit während ihrer Erwärmung zirkuliert.

Eine Heizvorrichtung ist aus dem Dokument WO2016/061701 A1 bekannt. Dieses Heizsystem ermöglicht die Erwärmung von Wasser nach den Prinzipien des Jean-Pain-Verfahrens und besteht darüber hinaus aus einer Vielzahl von Hohlkörpern, im Gegensatz zu der oben beschriebenen traditionellen Lösung, bei der nur Rohre vorgesehen sind. Diese Hohlkörper befinden sich im Inneren des Komposthaufens, stehen in direktem Kontakt mit dem sich zersetzenden Material und werden von der zu erhitzenden Flüssigkeit durchströmt. Sie erhöhen sowohl die Größe der gesamten Kontaktfläche (bestehend aus der gesamten Außenfläche der Rohre und Hohlkörper), über die die Wärme vom Komposthaufen auf das zu erwärmende Wasser übertragen wird, als auch die Menge des erwärmten Wassers im Vergleich zu der oben beschriebenen herkömmlichen Lösung. Es ist daher möglich, eine größere Wassermenge bei einer höheren Temperatur zu erhitzen als bei der oben beschriebenen Technik.

Bei diesem bekannten Heizsystem wird das erwärmte Wasser direkt einem Verbraucher zugeführt, in diesem Fall einem Schwimmbad, d. h. einem offenen Schwimmbad, in dem das Wasser einer ständigen Abkühlung durch die Umgebung, in der sich das Schwimmbad befindet, oder sogar dem Wetter ausgesetzt ist, wenn sich das Schwimmbad im Freien befindet. Um dieser Abkühlung entgegenzuwirken, ist ein Rohr vorgesehen, das das Wasser aus dem Becken zum Heizsystem leitet, um es wieder aufzuwärmen. Die Heizungsanlage selbst, zu der das Schwimmbad natürlich nicht gehört, da es nicht zur Erwärmung des Wassers beiträgt, arbeitet daher als Durchlauferhitzer, d. h. das Wasser tritt in die Heizungsanlage ein, fließt durch sie hindurch, wird erwärmt und verlässt sie dann wieder. Dies hat zur Folge, dass das Wasser nach jedem einzelnen Durchgang durch die Komponenten der Heizungsanlage an den Verbraucher abgegeben wird, so dass es schwierig ist, zu garantieren, dass das austretende Wasser immer die gewünschte Temperatur hat.

Das Dokument FR 2928369 A1 offenbart auch ein Heizsystem zum Erhitzen von Wasser, das die Prinzipien des Jean-Pain-Verfahrens nutzt. Um die Verweildauer des Wassers im Komposthaufen zu erhöhen und damit die Temperatur, mit der das Wasser erwärmt wird, zu steigern, enthält dieses bekannte Heizsystem auch einen Tank, im Gegensatz zu der eingangs beschriebenen traditionellen Lösung, bei der es nur Rohre gibt. Dieser Tank ermöglicht es, die Wassermenge in der Heizungsanlage im Vergleich zu der oben beschriebenen traditionellen Lösung zu erhöhen. Das erwärmte Wasser, das den Tank füllt, trägt zur Stabilisierung der Wassertemperatur bei, d. h. es sorgt dafür, dass sich die Temperatur des Wassers, das die Heizungsanlage verlässt, nicht unvorhersehbar ändert und unter einen Mindestwert fällt.

In der EP 2 103 583 wird ein Verfahren, eine Anlage und ein Gebäude mit einer solchen Anlage zur Energiegewinnung aus einem aeroben Kompostierungsprozess. Dieses Verfahren wird gesteuert indem man die Luftzuführung zum Kompostierungsprozess regelt.

### Kurzbeschreibung der Erfindung

Aufgabe der vorliegenden Erfindung ist es, die Probleme des Standes der Technik zu lösen und ein verbessertes Heizsystem zu realisieren.

Diese Aufgabe wird durch ein Heizsystem nach dem kennzeichnenden Teil von Anspruch 1 gelöst.

Vorgeschlagen wird eine Heizungsanlage zur Beheizung eines Gebäudes mit Hilfe von Wärme, die auf natürliche Weise durch das Zersetzungsmaterial eines Komposthaufens erzeugt wird.

Erfindungsgemäß weist die Heizungsanlage einen geschlossenen Kreislauf auf, der aus Rohren besteht, in denen eine Flüssigkeit, vorzugsweise Wasser, fließt. Die Flüssigkeit nimmt die Wärme im Inneren des Komposthaufens auf und führt sie nach außen ab. Die Absorption kann vorteilhaft über die im Inneren des Komposthaufens verlegten Rohrleitungen oder über einen Wärmetauscher erfolgen, der die im Inneren des Komposthaufens erzeugte Wärme mit den Rohrleitungen austauscht.

Die Rohrleitung an einem Auslass führt die erfindungsgemäße Flüssigkeit zu einer Wärmepumpe. Mit der Wärmepumpe wird dann ein Gebäude beheizt. Vorteilhafterweise handelt es sich um eine Wasser-Wasser-Wärmepumpe oder um eine Wärmepumpe mit Wasser-Frostschutzflüssigkeit/Lösung. Diese Wärmepumpe kann mit anderen bekannten Heizmitteln kombiniert werden, um das Gebäude zu heizen. Die abfließende Flüssigkeit wird von einer für den Komposthaufen zuständigen Pumpe umgewälzt, um einen kontinuierlichen Fluss zu gewährleisten.

In einer zweiten Ausführungsform ist ein Dreiwegeventil vor der Wärmepumpe angeordnet , das den Abfluss aus dem Komposthaufen in einen Kreislauf mit niedriger Temperatur, z. B. unter 40°C insbesondre 30 °C, einspeist und einen zweiten Kreislauf mit einer durch die Wärmepumpe erreichte Temperatur über oder gleich 30 °C aufteilt.

Der erste Niedertemperaturkreislauf kann für Verbraucher verwendet werden, bei denen keine hohe Temperatur erforderlich ist, z. B. bei Fußbodenheizungen, bei denen niedrigere Temperaturen erforderlich sind, und der zweite Kreislauf, der an die Wärmepumpe angeschlossen ist, bei denen eine höhere Temperatur erforderlich ist.

Die Heizungsanlage weist zumindest zwei Wärmespeicher auf, wobei einer im Kreislauf mit hoher Temperatur angeordnet ist und der zweite vorteilhafterweise im Komposthaufen.

Weitere Merkmale und Einzelheiten der Erfindung ergeben sich aus den Ansprüchen und der folgenden Beschreibung einer bevorzugten, nicht einschränkenden Ausführungsform, die in den beigefügten Zeichnungen dargestellt ist, wobei diese zeigen:
Figur 1 eine schematische Darstellung einer erfindungsgemäßen Heizungsanlage in einer ersten Ausführungsform, und

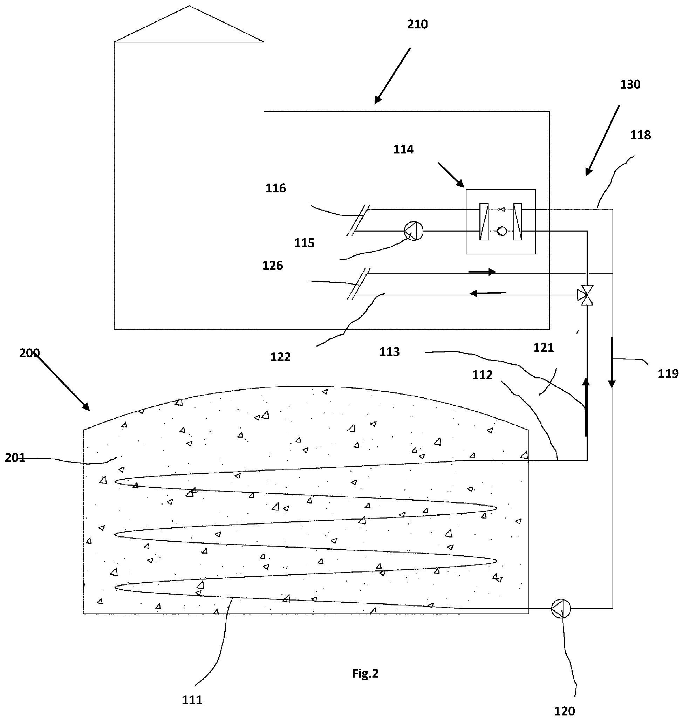

Figur 2: eine schematische Darstellung eines erfindungsgemäßen Heizsystems in einer zweiten Ausführungsform.

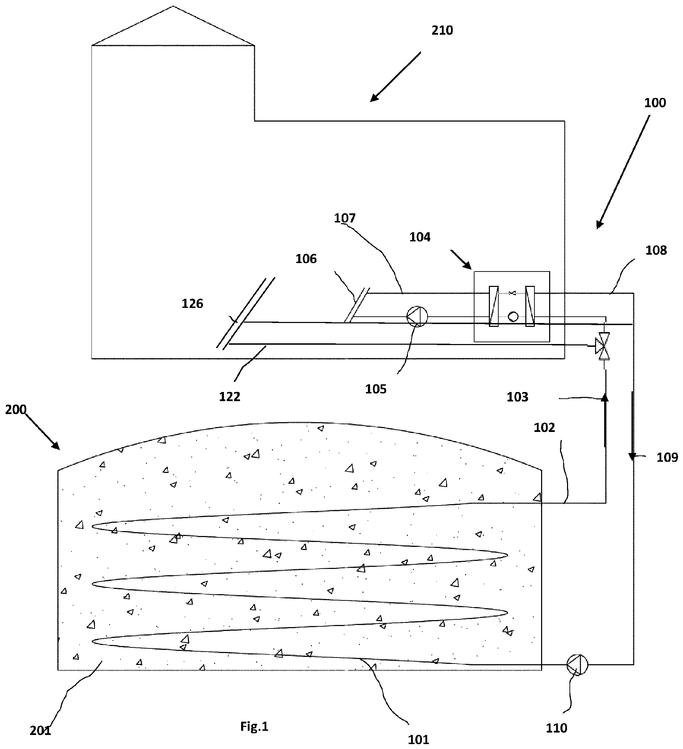

In Figur 1 ist eine erfindungsgemäße Heizungsanlage mit 100 bezeichnet. Diese Anlage 100 umfasst Rohrleitungen 101, 102, 108, 111, 112, 118, wobei ein erster Rohrleitungsabschnitt 101, 111 vorteilhaft in einem Komposthaufen 200 angeordnet ist, wobei der erste Rohrleitungsabschnitt 101, 111 bevorzugter Weise innerhalb des Komposthaufens 200 mit biologisch abbaubarem Material 201 angeordnet ist. Die Rohrleitungen bzw. Schläuche 101, 111 stehen vorzugsweise in direktem Kontakt mit dem biologischen Material 201 und nehmen die von diesem während des Zersetzungsprozesses erzeugte Wärme auf. Die von der Flüssigkeit in der Leitung 101,111 aufgenommene Wärme wird in Richtung 103,113 einer Versorgungseinrichtung 106,116 in einem Gebäude 201 abgeführt. Vorteilhafterweise wird Wasser als Flüssigkeit zum Transport der Wärme verwendet.

Im Komposthaufen 200 kann ein Wärmspeicher angeordnet sein An mindestens einem Verbraucher 106,116 ist eine Wärmepumpe 104,114 angeordnet. Vorteilhaft ist eine Flüssig-Flüssig-Wärmepumpe insbesondere eine Wasser -Wasser oder um eine Wärmepumpe mit Wasser-Frostschutzflüssigkeit/Lösung. Es sind zwei Kreisläufe vorhanden: ein Hochtemperaturkreislauf und ein Niedrigtemperaturkreislauf.

Die die Wärmepumpe 114 versorgende Rohrleitung 113 weist ein Dreiwegeventil 121 oder eine andere Vorrichtung stromaufwärts oder stromabwärts der Wärmepumpe 114 auf, die einen zweiten Verbraucher 126 versorgt, der niedrigere Temperaturen benötigt, z. B. für eine Fußbodenheizung oder dergleichen. Das Dreiwegeventil 121 versorgt den zweiten Verbraucher 126, für den keine hohe Temperatur erforderlich ist, so dass der zweite Kreislauf keine Wärmepumpe zur Anhebung der Temperatur benötigt.

Die andere, nicht abgebildete Vorrichtung könnte z. B. ein vorteilhaft geschichteter Wärmespeicher sein, der bei niedrigen Temperaturen den Sekundärkreislauf für den Niedertemperaturverbraucher 126 und bei hohen Temperaturen den Primärkreislauf mit der Wärmepumpe 114 speist.

Die Wärmepumpe 104, 114 kann beispielsweise einen Verdampfer oder mehrere Verdampfer umfassen, in dem eine Flüssigkeit durch die im Komposthaufen 200 von der Flüssigkeit aufgenommene Wärme verdampft wird, wobei ein Kompressor diese Flüssigkeit komprimiert und dann in einen flüssigen Zustand bringt, wobei diese Flüssigkeit Wärme mit der Versorgungseinrichtung 106, 116 austauscht und dann die austretende Flüssigkeit durch ein Entlüftungsventil fließt und zum Verdampfer zurückkehrt.

Über einen Abgangskreis 107 der Wärmepumpe 104, 114 wird der Verbraucher 106, 116 mit Wärme versorgt. Vorzugsweise ist dieser Kreislauf mit mindestens einer Pumpe 105,115 ausgestattet, um einen kontinuierlichen Durchfluss zu gewährleisten. Stromabwärts der Wärmepumpe 104, 114 wird die gekühlte Flüssigkeit durch die Rohrleitung 108, 118 in Richtung 109, 119 des Komposthaufens 201 geleitet. Der Kreislauf verfügt über mindestens eine Pumpe 110, 120, die den Durchfluss der Flüssigkeit sicherstellt.

Alternativ zu der gezeigten Ausführungsform kann im Inneren des Komposthaufens ein Kondensator angeordnet sein, der die im Komposthaufen 201 erzeugte Wärme aufnimmt und mit der Flüssigkeit in der Rohrleitung 101,111 austauscht, z. B. mittels eines Wärmetauschers.

Das hier beschriebene verbesserte Heizsystem 100 kann mit weiteren bekannten Heizsystemen integriert werden, z. B. mit Holz-, Solar-, Erdwärmeheizungen und dergleichen.

In einer bevorzugten Ausführungsform wird die Flüssigkeit vor der Wärmepumpe 114 abgekühlt in dem die Flüssigkeit Wärme über einen Wärmetauscher abgibt. Dieses abgeben Wärme kann zum vorwärmen des Wassers welche in die Wärmpumpe eintritt. Die Flüssigkeit welche der Wärmepumpe zugeführt wird sollte auf Temperatur zwischen 25 und 35 ° C abgekühlt werden.

In einer weiteren Ausführungsform wird der Flüssigkeit des Verbrauchers 126 eine Flüssigkeit hinzugefügt um diese abzukühlen zum Beispiel Frischwasser.

In einer vorteilhaften Ausführungsform umfasst die Wärmepumpe einen Verdampfer, der als Wärmetauscher innerhalb des Kompostiermaterials 201 angeordnet ist. Vorteilhaft ist, dass der Wärmespeicher Teil der Wärmepumpe sein kann.

### Liste der Referenznummern

100 Heizungsanlage
101 Rohrleitungen im Inneren des Komposthaufens
102 Rohrleitungen aus dem Komposthaufen
103 Pfeil der die Fließrichtung der Flüssigkeit anzeigt
104 Wärmepumpe
105 Pumpe
106 Verbraucher
107 Sekundärkreislauf
108 Rücklaufleitung von der Wärmepumpe
109 Pfeil der die Fließrichtung der Flüssigkeit anzeigt
110 Pumpe
111 Rohrleitungen im Inneren des Komposthaufens
112 Auslaufrohr aus dem Komposthaufens
113 Pfeil der die Fließrichtung der Flüssigkeit anzeigt
114 Wärmepumpe
115 Pumpe
116 Verbraucher
118 Rücklaufleitung von der Wärmepumpe
119 Pfeil der die Fließrichtung der Flüssigkeit anzeigt
120 Pumpen
121 Drei-Wege-Ventil
122 Niedertemperaturkreislauf
126 Verbraucher mit niedriger Temperatur
130 Heizungsanlage zweiter Entwurf
200 Komposthaufen
201 Kompostierungsmaterial/Zersetzungsmaterial
210 Gebäude

## Patentansprüche

1. Heizsystem (100) zum Beheizen eines Gebäudes (210) unter Verwendung von Wärme, die auf natürliche Weise durch das Zersetzungsmaterial (201) eines Komposthaufens (200) erzeugt wird, wobei das Heizsystem (100) einen geschlossenen Kreislauf aufweist, der durch Rohre (101, 102) gebildet wird (108,111,112,118), in denen eine Flüssigkeit fließt, nimmt die Flüssigkeit im Inneren des Komposthaufens (200) Wärme auf, speist über die Rohrleitung (102,112) eine Wärmepumpe (104,114), die die Temperatur erhöht und die Wärme an einen Verbraucher (106,116) in einem Hochtemperaturkreislauf abgibt, wobei eine Rücklaufleitung (108,118) den Kreislauf schließt , **dadurch gekennzeichnet, dass** der Kreislauf mindestens einen Niedertemperaturkreislauf stromauf oder stromab der Wärmepumpe umfasst, der einen zweiten Verbraucher (126) versorgt, der über ein Dreiwegeventil (121) an den Kreislauf angeschlossen ist und dass das System zumindest zwei Wärmespeicher umfasst , dass der Hochtemperaturkreislauf zumindest einen Wärmespeicher umfasst und das im Inneren des Komposthaufens (200) angeordnete Rohr (101) in direktem Kontakt mit dem darin befindlichen Kompostiergut (201) steht und mehrfach von der zu erhitzenden Flüssigkeit durchströmt wird, und dass die Wärmepumpe (104, 114) eine Flüssig-Flüssig-Wärmepumpe, insbesondere eine Wasser - Wasser oder eine Wärmepumpe mit Wasser-Frostschutzflüssigkeit/Lösung, ist.

2. Heizsystem (100) nach Anspruch 1, **dadurch gekennzeichnet, dass** der Kreislauf mindestens einen Wärmespeicher umfasst, der zwischen dem Auslass des Komposthaufens (200) und der Wärmepumpe (104, 114) oder innerhalb und/oder als Teil der Wärmepumpe angeordnet ist.

3. Heizsystem (100) nach einem der vorhergehenden Ansprüche, **dadurch gekennzeichnet, dass** die Wärmepumpe (104, 114) einen Verdampfer umfasst und dieser Verdampfer einer im Komposthaufen (200) angeordnete Wärmetauscher ist.

4. Heizsystem (100) nach den Ansprüchen 2 oder 3, **dadurch gekennzeichnet, dass** der Wärmespeicher ein Schichtwärmespeicher ist.

5. Heizsystem (100) nach einem der vorhergehenden Ansprüche, **dadurch gekennzeichnet, dass** die Flüssigkeit Wasser ist.

6. Heizsystem (100) nach einem der vorhergehenden Ansprüche, **dadurch gekennzeichnet, dass** das die Flüssigkeit vor der Wärmepumpe (114) abgekühlt über einen Wärmetauscher auf eine Temperatur 25 und 35 ° C.

7. Heizsystem (100) nach einem der vorhergehenden Ansprüche, **dadurch gekennzeichnet, dass** der Flüssigkeit des Verbrauchers (126) eine Flüssigkeit hinzugefügt wird um diese abzukühlen zum Beispiel Frischwasser.

## Claims

1. Heating system (100) for heating a building (210) using heat generated naturally by the decomposing material (201) of a compost heap (200), wherein the heating system (100) has a closed circuit formed by pipes (101, 102) (108, 111, 112, 118) in which a liquid flows, the liquid absorbs heat inside the compost heap (200), feeds a heat pump (104, 114) via the pipe (102, 112), which increases the temperature and transfers the heat to a consumer (106, 116) in a high-temperature circuit, a return pipe (108, 118) closing the circuit, **characterised in that** the circuit comprises at least one low-temperature circuit upstream or downstream of the heat pump, which supplies a second consumer (126) that is connected to the circuit via a three-way valve (121) and that the system comprises at least two heat accumulators , that the high-temperature circuit comprises at least one heat accumulator and the pipe (101) arranged inside the compost heap (200) is in direct contact with the compost material located therein (201) located inside the compost heap (200) and is traversed multiple times by the liquid to be heated, and that the heat pump (104, 114) is a liquid-liquid heat pump, in particular a water-water or a heat pump with water antifreeze liquid/solution.

2. Heating system (100) according to claim 1, **characterised in that** the circuit comprises at least one heat accumulator which is arranged between the outlet of the compost heap (200) and the heat pump (104, 114) or within and/or as part of the heat pump.

3. Heating system (100) according to one of the preceding claims, **characterised in that** the heat pump (104, 114) comprises an evaporator and this evaporator is the heat exchanger arranged in the compost heap (200).

4. Heating system (100) according to claims 2 or 3, **characterised in that** the heat storage unit is a stratified heat storage unit.

5. Heating system (100) according to one of the preceding claims, **characterised in that** the liquid is water.

6. Heating system (100) according to one of the preceding claims, **characterised in that** the liquid is cooled in front of the heat pump (114) via a heat exchanger to a temperature of between 25 and 35 °C.

7. Heating system (100) according to one of the preceding claims, **characterised in that** a liquid is added to the liquid of the consumer (126) in order to cool it, for example fresh water.

## Revendications

1. Système de chauffage (100) destiné à chauffer un bâtiment (210) en utilisant la chaleur générée naturellement par le matériau en décomposition (201) d'un tas de compost (200), le système de chauffage (100) comprenant un circuit fermé formé par des tuyaux (101, 102) (108, 111, 112, 118) dans lesquels circule un liquide, le liquide à l'intérieur du tas de compost (200), alimente via la conduite (102, 112) une pompe à chaleur (104, 114) qui augmente la température et restitue la chaleur à un consommateur (106, 116) dans un circuit à haute température, une conduite de retour (108, 118) fermant le circuit, **caractérisé en ce que** le circuit comprend au moins un circuit à basse température en amont ou en aval de la pompe à chaleur, qui alimente un deuxième consommateur (126) qui est raccordé au circuit via une vanne à trois voies (121) et que le système comprend au moins deux accumulateurs de chaleur , que le circuit à haute température comprend au moins un accumulateur de chaleur et que le tuyau (101) disposé à l'intérieur du tas de compost (200) est en contact direct avec le compost qui s'y trouve (201) et est traversé plusieurs fois par le liquide à chauffer, et que la pompe à chaleur (104, 114) est une pompe à chaleur liquide-liquide, en particulier une pompe à chaleur eau-eau ou une pompe à chaleur avec un liquide/une solution antigel à base d'eau.

2. Système de chauffage (100) selon la revendication 1, **caractérisé en ce que** le circuit comprend au moins un accumulateur de chaleur qui est disposé entre la sortie du tas de compost (200) et la pompe à chaleur (104, 114) ou à l'intérieur et/ou en tant que partie de la pompe à chaleur.

3. Système de chauffage (100) selon l'une des revendications précédentes, **caractérisé en ce que** la pompe à chaleur (104, 114) comprend un évaporateur et que cet évaporateur est l'échangeur de chaleur disposé dans le tas de compost (200).

4. Système de chauffage (100) selon les revendications 2 ou 3, **caractérisé en ce que** l'accumulateur de chaleur est un accumulateur de chaleur à stratification.

5. Système de chauffage (100) selon l'une des revendications précédentes, **caractérisé en ce que** le liquide est de l'eau.

6. Système de chauffage (100) selon l'une des revendications précédentes, **caractérisé en ce que** le liquide est refroidi avant la pompe à chaleur (114) via un échangeur de chaleur à une température comprise entre 25 et 35 °C.

7. Système de chauffage (100) selon l'une des revendications précédentes, **caractérisé en ce qu'**un liquide est ajouté au liquide du consommateur (126) afin de le refroidir, par exemple de l'eau fraîche.
